# EUROPÄISCHE PATENTSCHRIFT

(11) **EP 2 848 561 B1**
(45) Veröffentlichungstag und Bekanntmachung des Hinweises auf die Patenterteilung: **17.01.2018**
(21) Anmeldenummer: 14179907.2
(22) Anmeldetag: 05.08.2014
(51) Int. Cl.: B65G 57/03, B65G 57/24

(54) **Verfahren und Vorrichtung zur horizontalen Verschiebung von Artikellagen zwischen benachbarten Fördermodulen**
Method and device for horizontal movement of layers of articles between adjacent conveyor modules
Procédé et dispositif de déplacement horizontal d'emplacements d'articles entre des modules voisins

(30) Priorität: 12.09.2013 DE 102013218251
(43) Veröffentlichungstag der Anmeldung: 18.03.2015
(73) Patentinhaber: Krones Aktiengesellschaft, 93073 Neutraubling (DE)
(72) Erfinder: Beer, Erhard, 93073 Neutraubling (DE); Schweighofer, Georg, 93073 Neutraubling (DE); Osterhammer, Martin, 93073 Neutraubling (DE)
(74) Vertreter: Benninger, Johannes

(56) Entgegenhaltungen:
- EP-A1- 2 639 165
- EP-A1- 2 825 490
- WO-A1-2013/038102
- DE-A1- 3 107 495
- FR-A1- 2 789 061
- NL-A- 8 801 528
- US-A- 3 516 128

## Beschreibung

Die vorliegende Erfindung betrifft ein Verfahren zur horizontalen Verschiebung von Artikelgruppen oder -lagen zwischen benachbarten Fördermodulen mit den Merkmalen des unabhängigen Verfahrensanspruchs 1. Die Erfindung betrifft zudem eine entsprechende Vorrichtung mit den Merkmalen des unabhängigen Anspruchs 6. Zur Palettierung von Artikelgruppen oder -lagen durchlaufen die Artikel normalerweise zunächst eine Gruppierstation, in der die zunächst einreihig oder mehrreihig hintereinander transportierten Artikel zu palettierfähigen Lagen verschoben und/oder zusammengestellt werden. Diese palettierfähigen Lagen müssen an eine dafür geeignete Beladestation überführt werden, die in der Lage ist, Hubbewegungen durchzuführen. Die Beladestation legt diese Artikellagen dann an einem gewünschten Ort ab, bspw. an einem sog. Stapelplatz und einer darauf befindlichen Palette. Die Bereitstellungsstation und die Gruppierstation können wahlweise eine Einheit darstellen und/oder unmittelbar miteinander gekoppelt sein. Die Bereitstellungsstation und/oder die Gruppierstation umfassen eine Auflagefläche oder Auflageebene, auf der die Artikel gruppiert und zu einer Lage zusammengestellt werden. Die Beladestation umfasst ebenso eine Auflageebene, die einteilig oder auch zwei- oder mehrteilig ausgeführt sein kann. Bei einer bspw. zweiteilig ausgebildeten Auflagefläche der Beladestation besteht die Auflagefläche aus zwei Tragböden oder sog. Beladeplatten, welche im Beladezustand geschlossen und anschließend während der Abgabe- oder Ablegephase zum Ablegen der Artikellage auf einem Stapelplatz oder einer Palette geöffnet werden. Dem Fachmann sind hier zahlreiche Varianten bekannt, wie z.B. Jalousiegreiferköpfe oder ähnliches. Dabei verläuft ein solches Palettierverfahren mit einer aus dem Stand der Technik bekannten Palettiervorrichtung in einer Weise, dass zunächst Artikel mittels einer Gruppiereinrichtung zu einer palettierfähigen Lage zusammengestellt werden und im Anschluss daran von einem Bereitstellungsplatz bzw. einer Bereitstellungsstation in die Beladestation übergeben werden. Hierzu ist es notwendig, dass die Beladestation, wie z.B. ein an einem Hubwerk oder auch Roboter angeordneter Jalousiegreiferkopf, sich an den Bereitstellungsplatz anschließt damit die Überführung der Artikellage in die Beladestation erfolgen kann. Dabei verweilt der Jalousiegreiferkopf bzw. die Beladestation so lange an Ort und Stelle, bis die Lage vollständig von der Bereitstellungsstation in die Beladestation übergeben wurde. Befindet sich die Artikellage vollständig in der Beladestation, so positioniert die Beladestation durch horizontale und vertikale Bewegungen die Artikellage an einem gewünschten Abgabeort, meist auf einer auf einem Stapelplatz bereitgestellten Palette. Im Anschluss daran erfolgt die gleiche Prozedur erneut so lange, bis die gewünschte Anzahl an Lagen auf der Palette abgelegt wurde.

Die DE 10 2008 015 278 A1 offenbart eine Vorrichtung zum Beladen von Paletten mit Stückgütern mit einer Stückgutbereitstellungsstation und einer Übersetzvorrichtung zum Übersetzen der Gruppe von Stückgütern von der Stückgutbereitstellungsstation auf eine an einem Stapelplatz bereitgehaltene Palette und/oder eine bereits darauf befindliche übergesetzte Stückgutschicht. Die EP 1 321 396 A1 offenbart eine weitere Palettiervorrichtung, bei der Artikel in ungeordneter Weise von einer Horizontalfördereinrichtung in seitlicher Richtung verschoben und dabei gruppiert werden, bevor sie in kompletten Lagen auf eine Hubeinrichtung überführt werden. Die Hubeinrichtung bzw. Transferplattform dient dabei als Höhenausgleich zwischen der Gruppierstation und der Beladestation, welche die Lagen übereinander stapelt und mittels eines zu öffnenden Rollbodens auf einer Palette ablegt.

Aus der EP 1 908 709 A1 sind ein Verfahren und eine Vorrichtung zur Aufnahme und zum Umsetzen von Gebinden bekannt. Die Vorrichtung weist einen Tragboden für die Gebinde mit einer offenen Vorderseite zum Einbringen der Gebinde auf. Ein beweglicher Schieber dient dem Verlagern der Gebinde entlang einer horizontalen Aufnahmerichtung durch die offene Vorderseite.

Aus dem Stand der Technik sind verschiedene Varianten bekannt, z.B. NL8801528 oder WO/2013/038102, die den Oberbegriff des Anspruchs 1 beziehungsweise des Anspruchs 6 offenbaren, die jeweils dazu geeignet sind, in Lagen zusammengestellte Artikel auf einer Palette zu stapeln. Den bekannten Vorrichtungen und Verfahren ist jedoch der Nachteil gemeinsam, dass zum Überführen einer Artikellage von einer Bereitstellungsstation oder einer Transferplattform in eine Beladestation bzw. auf eine Beladestation die Auflageflächen derselben ortsfest sein müssen und sich während des Überführens der Artikellage nicht vertikal und/oder horizontal bewegen dürfen. Dies kann zu einem Zeitverlust dahingehend führen, dass der Beginn der Überführung der Artikellage erst nach vollständiger Positionierung und Stillstand der Beladestation oder der Transferplattform stattfinden kann. Es wird also immer so lange gewartet, bis die Beladestation die stationäre Bereitstellungsstation erreicht hat, bevor das Überführen der Artikellage gestartet werden kann. Auch bei der Verwendung einer Transferplattform wird ebenso so lange gewartet, bis die Transferplattform die aktuelle Position der Beladestation erreicht hat. Erst dann kann die Überführung der Artikellage gestartet werden. Zudem führen die jeweiligen betroffenen Stationen während der Überführung der Artikellage keine vertikalen und/oder Bewegungen durch, bis die Artikellage vollständig übergeben wurde. Entweder wird erst nach der Übergabe der Artikellage die Beladestation in die jeweilige nächste Abgabeposition gefahren oder die Beladestation befindet sich bereits bei der Übergabe der Artikellage in der nächsten gewünschten Abgabeposition.

Ein vorrangiges Ziel der vorliegenden Erfindung besteht darin, bei stationären und/oder vertikal beweglichen Auflageebenen aufeinander folgender Stationen eines Transportsystems die Transferzeiten zwischen den aufeinander folgenden Stationen zu reduzieren. In diesem Zusammenhang sollen die Zeiten zwischen dem Ablegen einer Artikellage und der Aufnahme einer weiteren Artikellage minimiert werden.

Dieses Ziel wird mit den Gegenständen der unabhängigen Ansprüche im Wesentlichen durch Erhöhung der Bewegungsfreiheitsgrade zumindest eines der aufeinander folgenden Fördermodule eines Transportsystems erreicht. Auf diese Weise kann die Förderung von Artikellagen innerhalb einer Förderstrecke dadurch beschleunigt werden, dass nicht mehr zwingend ein Stillstand von beweglichen Auflageebenen der Module gefordert wird, sondern dass durch eine oszillierende horizontale Bewegung einer Auflageebene einer Beladestation früher als bisher mit dem Überschieben der Artikellage begonnen werden kann als dies bisher der Fall war. Zudem kann ein abschließender Teil der Überschubbewegung im Bereich der Beladestation durchgeführt werden, während diese bereits eine vertikale Hubbewegung zur Platzierung der überschobenen Artikellage an einem Ablageplatz einleitet.

Es sei an dieser Stelle betont, dass in der nachfolgenden Beschreibung und in den Ansprüchen die Begriffe Bereitstellungsstation, Beladestation und Transferstation der Einfachheit halber auch durch den Begriff des Moduls bzw. Fördermoduls ersetzt sind. Jeder dieser genannten Stationen ist mindestens eine Auflagefläche oder Auflageebene zugeordnet, welche zum Aufnehmen einer Artikellage geeignet ist. So kann beispielsweise die Auflageebene oder Auflagefläche der Beladestation aus zwei Teilen bestehen. Die Auflageebene oder Auflageflächen der Bereitstellungsstation und/oder der Transferstation sind jedoch meist einteilig ausgebildet. Zudem wäre es denkbar, dass jede der Auflageflächen oder Auflageebenen auch durch angetriebene umlaufende Mattenketten- oder Rollenförderer o. dgl. gebildet ist.

Die Erfindung schlägt zur Erreichung der genannten Ziele einerseits ein Verfahren zur horizontalen Überführung oder Verschiebung von Artikelgruppen oder Artikellagen von einer ersten Auflagefläche oder Auflageebene eines ersten Fördermoduls auf eine zweite, vertikal bewegliche Auflagefläche oder zweite Auflageebene eines dem ersten Modul in einer Förderrichtung unmittelbar nachgeordneten zweiten Fördermoduls vor. Die Überführung kann bspw. mittels einer geeigneten Überführungseinrichtung durchgeführt werden, welche die Artikelgruppe oder Artikellage zwischen den beiden, zumindest während der Überschubbewegung annähernd fluchtenden Auflageebenen der beiden Fördermodule in Förderrichtung überführen kann. Diese Überschubeinrichtung kann insbesondere in Förderrichtung rückseitig an der zu verschiebenden Artikelgruppe oder Artikellage angreifen und bspw. durch einen sog. Überschubbalken o. dgl. gebildet sein.

Ein solcher Überschubbalken kann bspw. eine umlaufende Bewegung zwischen seinen zwei Anschlagpositionen ausführen, die sich normalerweise innerhalb eines Umrisses des ersten Fördermoduls befinden. So kann eine erste Anschlagposition dadurch charakterisiert sein, dass der umlaufende Überschubbalken sich hinter einer auf das erste Fördermodul geschobenen Artikellage absenkt und diese in horizontaler Förderrichtung auf das zweite Fördermodul überführt bzw. überschiebt. Der Überschubbalken führt hierbei eine horizontale Schubbewegung in Förderrichtung aus und befindet sich permanent in Höhe der zu überschiebenden Artikellage. Sobald seine zweite Anschlagposition - ggf. auch als Endlage zu bezeichnen - erreicht hat, endet seine horizontale Schubbewegung. Normalerweise befindet sich auch die zweite Anschlagposition innerhalb des Umrisses des ersten Fördermoduls, so dass der Bewegungsbereich des Überschubbalkens nicht in den Bereich des zweiten Fördermoduls hineinreicht, auch nicht bei ganz in Richtung zum ersten Fördermodul verschobener zweiter Auflageebene. Sobald die Artikellage vollständig auf diese zweite Auflageebene überschoben wurde, kann der Überschubbalken ggf. senkrecht nach oben gezogen werden und oberhalb des Förderniveaus der Artikellagen in horizontaler Rückzugbewegung wieder in seine erste Anschlagposition befördert werden, wo der Überschubbalken wieder auf das Förderniveau der Artikellagen abgesenkt werden kann. Normalerweise steht dort bereits die nächste zu überschiebene Artikellage bereit. Diese endlos und wiederholten umlaufenden Bewegungen des Überschubbalkens der Überführungseinrichtung können bspw. durch endlos umlaufende Zugmittel, an denen der Überschubbalken seitlich geführt ist, bewirkt werden.

Auch ein die Artikelgruppe oder Artikellage zwei-, drei- oder allseitig umgreifender Überschubrahmen kommt als geeignete Überführungseinrichtung in Frage. Die Überschubeinrichtung bleibt während des gesamten Überschubvorganges räumlich dem ersten Fördermodul zugeordnet, ragt also nicht in den Umriss des zweiten Fördermoduls hinein, sondern grenzt in ihrer Endlage oder Anschlagposition allenfalls an dessen Rand bzw. einer Grenz- oder Trennlinie oder -fuge zwischen erstem und zweitem Fördermodul. Auf diese Weise kann das zweite Fördermodul bereits seine Hubbewegung nach unten oder oben einleiten, wenn die letzte Artikelreihe der überschobenen Artikelgruppe oder Artikellage auf dem zweiten Fördermodul steht, ohne dass durch die bereits beginnende Vertikalbewegung eine Kollision mit dem Überschubbalken bzw. einem Element der Überschubeinrichtung drohen kann. Die Überschubeinrichtung bzw. der Überschubbalken kann unmittelbar nach dem Abgeben der Artikelgruppe oder Artikellage auf das zweite Fördermodul - dies wird im vorliegenden Zusammenhang auch als zweite Anschlagposition der Überschubeinrichtung oder des Überschubbalkens bezeichnet - wieder in seine Ausgangslage zurückgefahren werden, die im vorliegenden Zusammenhang auch als erste Anschlagposition bezeichnet wird. Diese horizontale Rückhubbewegung in die erste Anschlagposition entgegen der Förderrichtung erfolgt sinnvollerweise oberhalb oder unterhalb der Förderebene, damit eine bereits auf dem ersten Fördermodul befindliche weitere Artikelgruppe oder -lage nicht mit der zurücklaufenden Überschubeinrichtung bzw. mit dem zurückfahrenden Überschubbalken kollidieren kann. Um die Verarbeitungsgeschwindigkeit zu erhöhen, können bspw. zwei oder mehr solcher Überschubbalken an einem endlos umlaufenden Zugmittelantrieb angeordnet sein und solchermaßen wechselweise für den Überschub einer Artikellage auf das zweite Fördermodul sowie für die Rückführung in die erste Anschlagposition vorbereitet werden.

Erfindungsgemäß werden die überschobenen Artikelgruppen oder Artikellagen kurz vor oder nach Erreichen der Anschlagposition der Überschubeinrichtung (in Förderrichtung) auf dem zweiten Fördermodul mittels einer horizontal beweglichen Auflagefläche in Förderrichtung verschoben und/oder auf dem zweiten Fördermodul zentriert, bevor oder während das zweite Fördermodul eine vertikale Hubbewegung ausführt, um die Artikellage oder -gruppe auf ihrem vorgesehenen Ablage- oder Stapelplatz abzulegen und/oder zu stapeln. Mittels dieser - im Verlauf aufeinander folgender Überschubbewegungen mehrerer Artikelgruppen oder Artikellagen - oszillierenden Bewegungen der Auflageebene des zweiten Fördermoduls können Wartezeiten dieses zweiten Fördermoduls reduziert werden, da aufgrund der beweglichen Auflageebene der Überschubvorgang abgeschlossen werden kann, während bereits eine Hebe- oder Senkbewegung des zweiten Fördermoduls begonnen werden kann. Eine bisher unumgängliche Wartezeit, bis die Überschubeinrichtung bzw. ein sog. Lagenschieber wieder in Richtung zu ihrer/seiner anderen Endlage zurückgefahren und aus dem Kollisionsbereich mit dem zweiten Fördermodul bzw. der Beladestation gebracht wird, kann dadurch eingespart werden.

Die bereits während der abschließenden Phase der Überschubbewegung der Artikellage oder -gruppe durchführbare Vertikalbewegung des zweiten Fördermoduls bzw. dessen Auflageebene sorgt für eine Reduzierung bzw. Minimierung der erforderlichen Zeiten vom Überführen der Artikellagen bis zum Ablegen der Artikellagen und trägt somit zu einer zeitlichen Überscheidung bzw. Parallelität einzelner Verfahrensschritte bei, welche zum Palettieren von Artikellagen notwendig sind. Diese zeitliche und/oder prozessuale Überscheidung einzelner Verfahrensschritte spart Zeit und trägt somit erheblich zu einer Leistungserhöhung des davon beeinflussten Palettierverfahrens bei. Es versteht sich für den Fachmann von selbst, dass bei dieser horizontalen Überführung die Relativpositionen einer die Artikelgruppe oder -lage bildenden Mehrzahl von Artikeln annähernd beibehalten werden sollen.

Bei dem erfindungsgemäßen Verfahren ist weiterhin dem zweiten Fördermodul eine in horizontaler Richtung zwischen zwei Endlagen bewegliche und/oder oszillierbare Auflageebene zugeordnet, die sich bei beginnender Überschubbewegung der Artikelgruppe oder Artikellage in ihrer ersten Endlage befindet. Diese erste Endlage ist dadurch charakterisiert, dass sich die Auflageebene hierbei näher am ersten Fördermodul befindet als in einer zweiten Endlage, wo sich die Auflageebene in einer vom ersten Fördermodul weiter entfernten Position befindet. Zudem ist bei dem Verfahren vorgesehen, dass die horizontal bewegliche Auflagefläche zumindest kurz vor dem beginnenden Überschubvorgang der Artikelgruppe oder Artikellage auf das zweite Fördermodul in die erste Endlage gebracht wird, in der sie sich dem ersten Fördermodul nähert oder dieses kontaktiert oder zumindest abschnittsweise auf dessen Oberfläche aufliegt. Außerdem kann sich die horizontal bewegliche Auflagefläche des zweiten Fördermoduls bzw. der Beladestation bei Annäherung der Überschubeinrichtung an einen an das zweite Fördermodul grenzenden Randabschnitt des ersten Fördermoduls bzw. bei dessen Erreichen in Richtung der zweiten Endlage bewegen, wobei sich die zweite Auflagefläche dabei parallel zur Überschubrichtung bewegt. Der Lagenschieber bzw. die Überschubeinrichtung können sich somit bis zum Rand der ersten Auflageebene bewegen, so dass der Rand der zweiten Auflageebene noch nicht erreicht oder überschritten wird. Da auf diese Weise die Artikelgruppe oder Artikellage noch nicht bis zur Mitte der zweiten Auflageebene des vertikal beweglichen zweiten Fördermoduls geschoben werden kann, übernimmt die horizontal und relativ zum zweiten Fördermodul bewegliche zweite Auflageebene den restlichen Überschubweg, indem sie eine Relativbewegung parallel zur Förderrichtung ausführt, der vor der Überschubbewegung eine entsprechende gegengerichtete Relativbewegung vorausgegangen sein muss.

Bei dem erfindungsgemäßen Verfahren ist vorgesehen, dass die horizontale Überführung der Artikelgruppe oder -lage bei miteinander annähernd auf gleicher Ebene befindenden ersten und zweiten Auflageebenen der ersten und zweiten Fördermodule erfolgt. Zur Sicherstellung dieser fluchtenden Anordnung der ersten und zweiten Auflageebenen der ersten und zweiten Module ist es erforderlich, dass die Auflageebenen zumindest während der Schiebebewegung des Lagenschiebers bzw. der Überschubeinrichtung ruhen bzw. stillstehen und sich nicht relativ zueinander in vertikaler Richtung bewegen. Vielmehr findet gemäß des erfindungsgemäßen Verfahrens während und kurz vor dem Abschluss der Überführung jeder Artikellage eine horizontale Bewegung der zweiten Auflageebene statt, die mit einer beginnenden Vertikalbewegung des zweiten Fördermoduls bzw. dessen zweiter Auflageebene nach oben oder unten kombiniert sein kann. Der Vorteil dieses Verfahrens ist insbesondere darin zu sehen, dass der Endzeitpunkt des Überführens einer Artikellage von einer ersten Auflagefläche eines ersten Moduls auf eine zweite Auflageebene eines zweiten Moduls nicht abgewartet werden muss, um bereits mit einer vertikalen Bewegung der zweiten Auflageebene zu beginnen. Somit findet während der Endphase einer Überschubbewegung bereits die vertikale Positionierung des zweiten Fördermoduls bzw. der Beladestation statt, um bspw. eine Ablageposition zum Ablegen, Stapeln und/oder Palettieren der Artikellage oder Artikelgruppe zu erreichen. Somit können die Überschubprozesse insgesamt - d.h. in der Summe aller notwendigen Verfahrensschritte - in kürzerer Zeit bzw. in höherer Geschwindigkeit ablaufen.

Bei einer Variante des erfindungsgemäßen Verfahrens ist es durchaus auch möglich, dass die erste Auflageebene des ersten Fördermoduls während der Überführung der Artikelgruppe oder Artikellage zumindest zeit- oder phasenweise in ihrem Höhenniveau gegenüber der zweiten Auflageebene des nachfolgenden zweiten Fördermoduls unter Ausbildung einer Stufe geringfügig höher oder tiefer liegt. In diesem Fall können die Artikel bspw. über eine kleine Rampe nach oben oder unten auf das nachfolgende zweite Modul geschoben werden. Diese Variante ermöglicht es, dass der Überschubvorgang ggf. noch früher begonnen werden kann, bevor die Auflageebenen vollständig miteinander fluchten, was wiederum Zeit für den Überschubvorgang und damit den gesamten Palettiervorgang einsparen kann. Selbstverständlich ist es auch möglich, dass die Auflageebenen bereits vor der Kontaktierung der zweiten Auflageebene mit den überschobenen Artikeln weitgehend miteinander fluchten und zu diesem Zweck das gleiche Höhenniveau erreicht haben.

Andererseits ermöglichen die verschiedenen Varianten des erfindungsgemäßen Verfahrens durch die aufeinander abgestimmte Vertikalsteuerung zumindest der zweiten Auflageebene des dem ersten Fördermoduls nachgeordneten zweiten Moduls, dass die Überführung der Artikelgruppe oder Artikellage von der ersten Auflageebene des ersten Moduls auf die zweite Auflageebene des zweiten Moduls unmittelbar vor einer Phase der Ausbildung der gemeinsamen Auflageebene der ersten und zweiten Auflageebenen oder gleichzeitig mit Erreichung dieser Phase gestartet wird. Da die zuvorderst stehenden Artikel einer vollständigen Artikellage normalerweise nicht am äußersten vorderen Rand der ersten Auflageebene stehen, kann die Überschubbewegung bereits begonnen werden, ohne dass bereits eine gemeinsame Auflageebene gebildet ist. Diese muss zumindest näherungsweise, ggf. unter Inkaufnahme einer leichten Stufe, erst dann gebildet sein, wenn die ersten Artikel tatsächlich die Grenze zwischen den beiden Auflageebenen passieren und auf die zweite Auflageebene des zweiten Moduls geschoben werden. Darüber hinaus müssen die erste Auflageebene des ersten Moduls und die zweite Auflageebene des zweiten Moduls zumindest so lange die erwähnte gemeinsame Auflageebene bilden, bis die Artikelgruppe oder Artikellage vollständig auf die in ihrer entsprechenden Endlage befindlichen zweite Auflageebene überführt wurde. Die gemeinsame Auflageebene kann somit bereits unmittelbar nach Passieren der hintersten Artikelreihe der kompletten Artikellage getrennt werden, indem bspw. die zweite Auflageebene des zweiten Moduls eine überlagerte Horizontal- und Vertikalbewegung durchführt, um sich dem Ablage- oder Stapelplatz anzunähern.

Vorzugsweise sieht das Verfahren vor, dass die Auflageebene des zweiten Fördermoduls durch eine horizontal zwischen ihren beiden Endlagen bewegliche Platte gebildet ist, die eine Fläche aufweist, die wenigstens der Grundfläche einer aufzunehmenden Artikelgruppe oder Artikellage entspricht. Normalerweise jedoch ist diese Platte zumindest geringfügig größer als die damit transportierten Artikelgruppen oder Artikellagen, da dies für einen ausreichend stabilen Transport gleichartiger oder unterschiedlich großer Artikellagen oder -gruppen unverzichtbar ist.

Im Zusammenhang der vorliegenden Erfindung ist es weiterhin wichtig, dass bei der erwähnten horizontalen Verschiebung der Artikelgruppe oder -lage die zwischen den aufeinander folgenden Auflageebenen die Relativpositionen einer die Artikelgruppe oder Artikellage bildenden Mehrzahl von Artikeln annähernd beibehalten werden. Die Verschiebung erfolgt deshalb mittels einer geeigneten Überschubeinrichtung, welche die Artikellage zwischen den beiden annähernd fluchtenden Auflageebenen der beiden Module in Förderrichtung verschieben kann. Die Überschubeinrichtung kann insbesondere durch einen horizontal im räumlichen Bereich des ersten Fördermoduls beweglichen Schubbalkens oder sog. Lagenschiebers o. dgl. gebildet sein, der in Förderrichtung rückseitig an den zu überschiebenden Lagen angreift, d.h. an den jeweils zuhinterst befindlichen Artikeln der überschobenen Lagen. Zumindest das zweite Fördermodul kann vertikal positioniert werden, bspw. in Bezug auf eine Stapelhöhe von bereits übereinander abgelegten Artikellagen auf einem Stapelplatz. Die reduzierten Überschubzeiten und die bereits während des Überschubs durchführbaren Vertikalbewegungen zumindest des zweiten Fördermoduls sorgen für eine Minimierung der erforderlichen Transportzeiten und tragen zu einer Beschleunigung der erzielbaren Fördergeschwindigkeiten bei.

Um die zumindest temporär aufeinander abgestimmten Horizontal- und Vertikalbewegungen der Auflageebenen der ersten und zweiten Module zu erfassen, kann eine permanente Erfassung der aktuellen Vertikal- und/oder Horizontalpositionen der Auflageebenen sowie der Positionen der überschobenen Artikellagen sinnvoll sein, wobei die erfassten Werte zur Berechnung einer Annäherung zur Vorbereitung eines Überschubvorganges verarbeitet werden können. Das Ziel dieser Positionserfassung und Datenverarbeitung ist eine optimal aufeinander abgestimmte Bewegung der beiden Auflageebenen der aufeinander folgenden Module, so dass die Transferzeiten minimiert werden.

Zudem kann wahlweise vorgesehen sein, dass ein zumindest temporär den in Förderrichtung frontseitig befindlichen Artikeln zugeordneter Anlagebalken der Artikelgruppe oder -lage zumindest kurz vor oder bei Erreichen der Ruhelage mit geringem Abstand zu den vordersten Artikeln vorauseilt oder an diesen anliegt. Das erste Modul kann bspw. durch eine Transfereinheit oder einen Transfertisch mit vertikal beweglicher Auflageebene gebildet sein, während das zweite Modul durch eine Beladestation gebildet sein kann, die ebenfalls eine vertikal bewegliche Auflageebene umfasst. Eine sinnvolle Steuervorschrift kann vorsehen, dass eine aktuelle Vertikalposition der Beladestation bzw. der zweiten Auflageebene des zweiten Moduls die Richtung einer Vertikalbewegung der Transfereinheit bzw. der ersten Auflageebene des ersten Moduls zur Annäherung der beiden Module bzw. ihrer Auflageebenen dominiert.

Die Stabilisierung der mit hoher Geschwindigkeit zwischen benachbarten Modulen oder Hubwerken überschiebbaren Artikellagen kann durch das Zusammenwirken des von hinten schiebenden Schubbalkens und des optionalen, von vorne stabilisierenden Anlagebalkens erreicht werden, wobei die Artikellage in diesem Förderabschnitt sinnvollerweise seitlich geführt sein kann. Durch die rückseitige Einwirkung des Schubbalkens und die seitlichen Führungen können Relativpositionen einer die Artikelgruppe bildenden Mehrzahl von Artikeln relativ zueinander weitgehend beibehalten werden; d.h. das Lagenbild der verschobenen Artikelgruppe bleibt dabei weitgehend aufrechterhalten. Dies kann im Wesentlichen dadurch erreicht werden, dass der optional zu verstehende Anlagebalken der Artikelgruppe zumindest kurz vor oder bei Erreichen der Ruhelage mit geringem Abstand zu den vordersten Artikeln vorauseilt oder an diesen anliegt.

Wenn im vorliegenden Zusammenhang meist von Artikeln oder von Artikellagen die Rede ist, so können dies grundsätzlich die unterschiedlichsten Packgüter sein, bspw. einzelne Kartons, Getränkebehälter wie Flaschen, Dosen oder Getränkekartons, Stückgüter etc., die in vorgegebenen Anordnungen palettiert, gestapelt oder depalletiert werden können. Als Artikel kommen auch Gebinde in Frage, bspw. sog. Foliengebinde, Umreifungsgebinde o. dgl.

Darüber hinaus kann erwähnt werden, dass bei einer weiteren Variante des erfindungsgemäßen Verfahrens die Artikelgruppen oder Artikellagen vom vertikal beweglichen zweiten Fördermodul auf ein dem zweiten Fördermodul in Förderrichtung unmittelbar nachgeordnetes, vertikal bewegliches drittes Fördermodul verschoben werden können. Dieses optionale dritte Fördermodul kann insbesondere durch eine vertikal bewegliche Beladestation o. dgl. gebildet sein, während das zweite Fördermodul bspw. durch eine sog. Transferstation gebildet sein kann. Dabei kann vorgesehen sein, dass das zweite Fördermodul und das dritte Fördermodul während des Überschubvorgangs der Artikelgruppe oder Artikellage auf gleicher vertikaler Höhe ruhen, bis der Überschubvorgang abgeschlossen ist. Wahlweise kann jedoch auch vorgesehen sein, dass das zweite Fördermodul und das dritte Fördermodul während des Überschubvorgangs der Artikelgruppe oder Artikellage gleichsinnige synchrone Vertikalbewegungen ausführen, so dass sich auf diese Weise die Beladestation bzw. das dritte Fördermodul bereits auf einen nachfolgenden Ablegevorgang oder Absetzvorgang der Artikellage vorbereiten kann, bspw. auf einen dafür vorbereiteten Stapelplatz mit einer darauf befindlichen Palette oder auf einer Oberseite einer dort zuvor bereits abgelegten Artikellage.

Die vorliegende Erfindung umfasst weiterhin eine Vorrichtung zur horizontalen Verschiebung von Artikelgruppen oder Artikellagen zwischen wenigstens zwei Auflageebenen benachbarter Fördermodulen unter weitgehender Beibehaltung der Relativpositionen einer die jeweils verschobene Artikelgruppe oder -lage bildenden Mehrzahl von Artikeln relativ zueinander. Diese Vorrichtung kann insbesondere eine geeignete Überschubeinrichtung zum horizontalen Verschieben der Artikellagen auf die zweite Auflageebene eines dem ersten Modul nachgeordneten zweiten Fördermoduls, das vertikal beweglich angeordnet ist, umfassen. Gemäß der Erfindung fluchten die ersten und zweiten Auflageebenen der ersten und zweiten Module zumindest während des Überschubvorgangs näherungsweise, um das störungsfreie horizontale Überschieben einer Artikelgruppe oder -lage zwischen den Auflageebenen der Module zu ermöglichen. Allerdings weist das zweite Fördermodul eine in horizontaler Richtung zwischen zwei Endlagen bewegliche und/oder oszillierbare Auflageebene auf, die in der ersten Endlage unmittelbar oder nahe am ersten Fördermodul platziert ist, und die in der zweiten Endlage zumindest geringfügig vom ersten Fördermodul entfernt und/oder gegenüber der zweiten Auflageebene annähernd zentriert ist. Dadurch können die Überschubbewegungen auf die oben beschriebene beschleunigte Weise erfolgen, was eine Zeitersparnis aufgrund schnellerer Überschubvorgänge ermöglicht. Die oszillierend gegenüber dem zweiten Fördermodul in horizontaler Richtung bewegliche bzw. verschiebbare zweite Auflageebene kann bspw. durch einen Auflagetisch aus Holz bzw. mit einer Holzoberfläche oder einer geeigneten, strukturierten Oberfläche, z.B. auch aus Kunststoff, gebildet sein, die einen ausreichenden Reibbeiwert aufweist, um ein unkontrolliertes Rutschen der darauf stehenden Artikel oder Stückgüter zu verhindern, wenn der Auflagetisch schnell in horizontaler Richtung bewegt wird. Andererseits sollte die Oberflächenstruktur ausreichend glatt sein, um den Überschubbewegungen der Artikellage keinen zu hohen Reibungswiderstand entgegenzusetzen. Die horizontalen Bewegungen der zweiten Auflageebene können zwischen wenigen Zentimetern und typischerweise bis zu 20 oder 25 Zentimetern betragen, wobei ein sinnvoller Verstellbereich bei ca. 8 bis 12 ... 15 Zentimetern, insbesondere bei ca. 10 Zentimetern liegen kann. D.h., diese Zentimeterangaben definieren den horizontalen Abstand der beiden Endlagen bzw. Endanschläge der zweiten Auflageebene.

Wahlweise kann bei der Vorrichtung vorgesehen sein, dass den ersten und/oder zweiten Modulen jeweils Positionssensoren zur Erfassung der aktuellen Vertikal- und/oder Horizontalpositionen der ersten und zweiten Auflageebenen zugeordnet sind, deren Werte zur Berechnung einer Annäherung zur Vorbereitung eines Überschubvorganges verarbeitet werden können. Mit Hilfe dieser Sensoren können jederzeit die Vertikalpositionen und Horizontalpositionen der Auflageebenen bestimmt und in einer die Signale der Sensoren verarbeiteten Steuerung aufeinander abgestimmt werden, so dass beschleunigte Überschubbewegungen unter gleichzeitiger horizontaler Bewegung der zweiten Auflageebene und vertikaler Bewegung des die zweite Auflageebene tragenden zweiten Fördermoduls ermöglicht sind.

Das erste Modul kann bspw. durch eine Transfereinheit oder einen Transfertisch oder eine sog. Gruppierstation oder einen Gruppiertisch mit feststehendem oder ggf. auch vertikal beweglicher erster Auflageebene gebildet sein, während das zweite Modul bspw. durch eine Beladestation mit vertikal beweglicher zweiter Auflageebene gebildet sein kann. Das zweite Modul kann bspw. auch durch einen Aufzug und/oder einen Jalousiegreiferkopf oder ein anderes Hubwerk gebildet sein, das einen Höhenausgleich ermöglicht. Wenn im Zusammenhang der vorliegenden Erfindung von einem Höhenausgleich die Rede ist, so ist damit insbesondere eine Stapelmöglichkeit bei der Überführung der Artikellagen auf eines der Module gemeint. Da die Artikellagen bei der Palettierung in der Regel in mehreren Lagen übereinander gestapelt werden, muss zumindest das zweite Fördermodul eine Höhenverstellbarkeit aufweisen. Diese Höhenverstellbarkeit umfasst sowohl eine Absenkbarkeit nach unten zur Überführung der Artikellagen in einem unteren Niveau als auch eine Hebbarkeit über das Niveau des ersten Moduls bzw. der Gruppierstation, um die Artikellagen auf die Oberseite bereits zuvor übereinander gestapelter Artikellagen ablegen zu können. Entsprechendes gilt auch bei der Depalettierung, da ein zu depalettierender Stapel mit mehreren Artikellagen je nach Fortschritt der Entnahme allmählich kleiner wird und eine Höhenanpassung des übernehmenden Moduls erfordert.

Die Überschubeinrichtung kann wenigstens einen an den Artikeln angreifenden Schubbalken und/oder wenigstens einen frontseitig an der Artikellage angreifenden Anlagebalken umfassen, der in seiner Bewegung in Überschubrichtung zumindest temporär mit dem Schubbalken gekoppelt ist und auf diese Weise das Umfallen oder Verrutschen von Artikeln bei schnellen Überschub- und Bremsvorgängen verhindern kann. Wahlweise kann zumindest einer der Schubbalken und/oder wenigstens einer der Anlagebalken mit einem endlos umlaufenden Zugmittelantrieb zur Herstellung der Schubbewegungen gekoppelt sein. Es sind jedoch auch andere Antriebe für die Schub- und Anlagebalken möglich, so bspw. Linearantriebe.

Ergänzend sei darauf hingewiesen, dass auch das zweite, vertikal bewegliche Fördermodul eine geeignete Überschubeinrichtung aufweisen kann, um die dort befindliche Artikellage auf ein weiteres, hier nicht gesondert erwähntes Fördermodul, bspw. eine Beladestation o. dgl., überführen bzw. überschieben zu können. Diese zusätzliche, dem zweiten Fördermodul zugeordnete Überschubeinrichtung kann ggf. relativ kurze Bewegungsbereiche aufweisen, da lediglich ein vollständiges Überführen auf ein weiteres Förderelement bzw. ein Herunterschieben der Artikellage vom zweiten Fördermodul zu gewährleisten ist. Wahlweise kann dieses Verschieben der Artikellage vom zweiten Fördermodul auch während dessen vertikaler Bewegung erfolgen, insbesondere bei einem synchron dazu beweglichen weiteren Fördermodul, bspw. einer entsprechend vertikal und synchron zum zweiten Fördermodul beweglichen Beladestation, die dem zweiten Fördermodul unmittelbar nachgeordnet ist.

Die erfindungsgemäße Vorrichtung erstreckt sich auf ein weiteres, drittes Fördermodul, das dem zweiten Fördermodul in Förderrichtung unmittelbar nachgeordnet sein kann. Somit können bei dieser weiteren Variante der Erfindung die Artikelgruppen oder Artikellagen vom vertikal beweglichen zweiten Fördermodul auf das vertikal bewegliche dritte Fördermodul verschoben werden. Das optionale dritte Fördermodul, das wie das zweite Fördermodul vertikal beweglich ist, kann insbesondere durch eine sog. Beladestation o. dgl. gebildet sein, während das zweite Fördermodul bspw. durch eine sog. Transferstation gebildet sein kann. Dabei kann vorgesehen sein, dass das zweite Fördermodul und das dritte Fördermodul während des Überschubvorgangs der Artikelgruppe oder Artikellage auf gleicher vertikaler Höhe ruhen, bis der Überschubvorgang abgeschlossen ist. Wahlweise kann jedoch auch vorgesehen sein, dass das zweite Fördermodul und das dritte Fördermodul während des Überschubvorgangs der Artikelgruppe oder Artikellage gleichsinnige synchrone Vertikalbewegungen ausführen, so dass sich auf diese Weise die Beladestation bzw. das dritte Fördermodul bereits auf einen nachfolgenden Ablegevorgang oder Absetzvorgang der Artikellage vorbereiten kann, bspw. auf einen dafür vorbereiteten Stapelplatz mit einer darauf befindlichen Palette oder auf einer Oberseite einer dort zuvor bereits abgelegten Artikellage.

Schließlich sollte erwähnt werden, dass die im vorliegenden Zusammenhang als Überschubeinrichtung bezeichnete Vorrichtung zum Überführen der Artikellagen oder Artikelgruppen zwischen den einzelnen Fördermodulen wahlweise auch durch hierfür vorbereitete Auflageebenen gebildet sein können, bspw. durch deren Ausbildung als Horizontalfördereinrichtungen, Mattenketten o. dgl., mit deren Hilfe die darauf stehenden Artikelgruppen oder Artikellagen in Förderrichtung auf nachgeordnete Förder- oder Auflageebenen weiterer Fördermodule überführt werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt zwei schematische Ansichten einer beginnenden Überschubbewegung einer Artikellage von einem ersten Fördermodul auf ein benachbartes zweites Fördermodul.
Fig. 2 bis Fig. 9 zeigen in verschiedenen aufeinander folgenden schematischen Ansichten die Prozessschritte beim Überschub einer Artikellage zwischen zwei benachbarten Modulen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

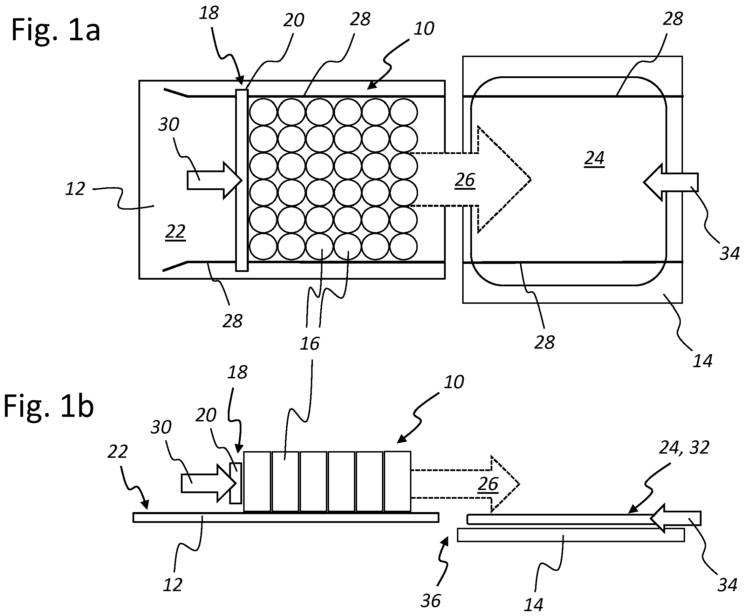

Die Fig. 1 zeigt in einer schematischen Draufsicht (Fig. 1a) und in einer schematischen Seitenansicht (Fig. 1b) den Beginn einer horizontalen Verschiebung einer Artikelgruppe oder Artikellage 10 aus einer Startposition von einem ersten Fördermodul 12, bspw. von einem Gruppiertisch, der Teil eines Gruppiersystems sein kann, in Richtung zur einer Endposition in einem zweiten Fördermodul 14, das bspw. ein Hubmodul oder eine Beladestation o. dgl. sein kann. Die Artikellage 10 umfasst im gezeigten Ausführungsbeispiel eine regelmäßige Anordnung einer Mehrzahl von Artikeln 16, die im Rechteckverbund stehen und ohne Änderung des Lagenbildes mittels einer Überschubeinrichtung 18 in Gestalt eines Schubbalkens 20 von einer ersten Auflageebene 22 des ersten Fördermoduls 12 auf eine zweite Auflageebene 24 des zweiten Fördermoduls 14 geschoben werden sollen. Die Artikel 16 können bspw. Kartons, Gebinde mit mehreren einzelnen Artikeln oder Behältern oder auch einzelne Behälter sein, die in regelmäßiger Anordnung nebeneinander stehen.

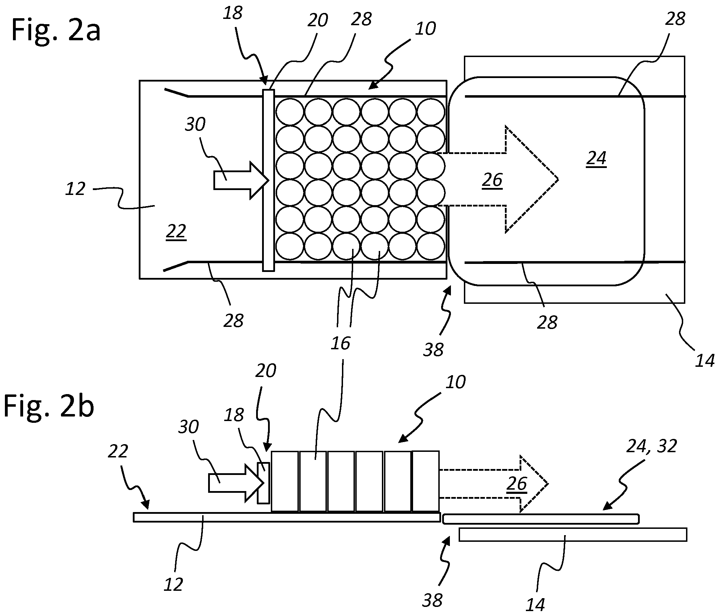

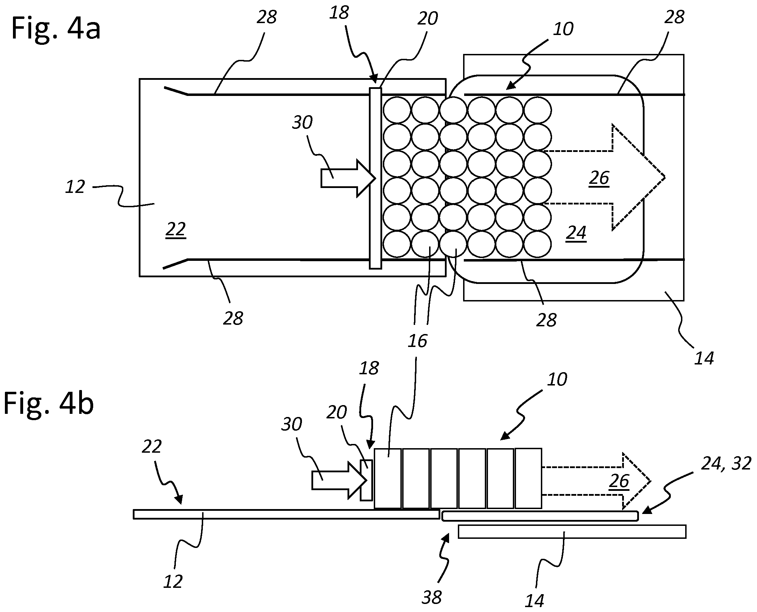

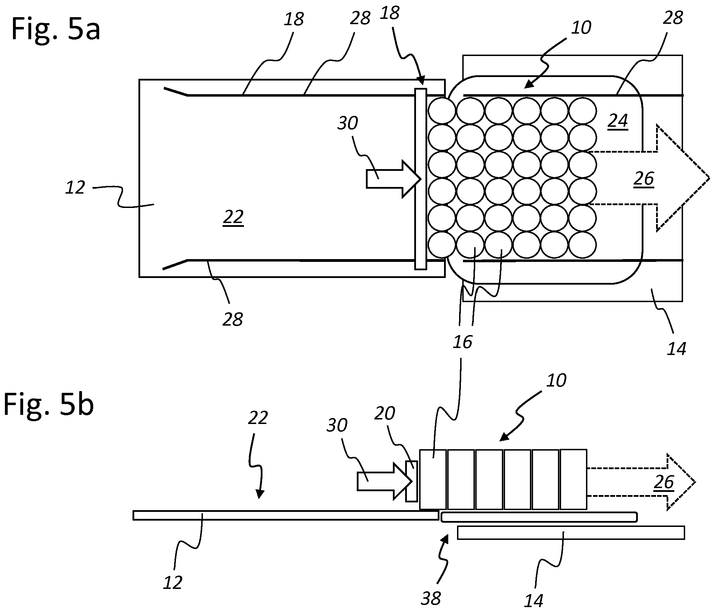

Der für die Verschiebung der Artikelgruppe oder Artikellage 10 verantwortliche Schubbalken 20 der Überschubeinrichtung 18 greift an den in Bezug auf die Förder- bzw. Vorschubbewegung 26 rückseits der Artikelgruppe 10 befindlichen Artikeln 16 an und verschiebt dadurch die gesamte Artikelgruppe oder Artikellage 10, die ggf. zur Aufrechterhaltung des Lagenbildes seitlich geführt sein kann. Die optionalen seitlichen Führungen sind in der Fig. 1a und in den folgenden Draufsichten der Figuren 2a bis 9c jeweils mit der Bezugsziffer 28 bezeichnet. Durch die rückseitige Einwirkung des Schubbalkens 20 und die beidseitig des Überschubweges angeordneten seitlichen Führungen 28 können die Relativpositionen der die Artikelgruppe 10 bildenden Mehrzahl von Artikeln 16 relativ zueinander weitgehend beibehalten werden; d.h. das Lagenbild der verschobenen Artikelgruppe 10 bleibt entlang der Vorschubbewegung 26 weitgehend aufrechterhalten. In den schematischen Seitenansichten (Fig. 1b etc.) wurde jeweils auf die Darstellung der seitlichen Führungen 28 aus Gründen der besseren Übersichtlichkeit verzichtet. Die Schiebebewegung des Schubbalkens 20 der Überschubeinrichtung 18 ist mit der Bezugsziffer 30 bezeichnet. Die Schiebebewegung 30 ist zwangsläufig der Förder- bzw. Vorschubbewegung 26 der mit der Überschubeinrichtung 18 nach rechts verschobenen Artikellage 10 gleichgerichtet.

Es sei darauf hingewiesen, dass ein ggf. vorhandener weiterer Schubbalken 20, der nach einem erfolgten Überschubvorgang (nicht dargestellt) in seine erste Endlage am Förderbeginn des ersten Fördermoduls 12 zurückgeführt wird, in dieser Darstellung nicht eingezeichnet ist. Um nicht mit weiter folgenden Artikellagen 10 zu kollidieren, muss eine solche Rücklaufbewegung oberhalb oder unterhalb der ersten Auflageebene 22 des ersten Fördermoduls 12 erfolgen.

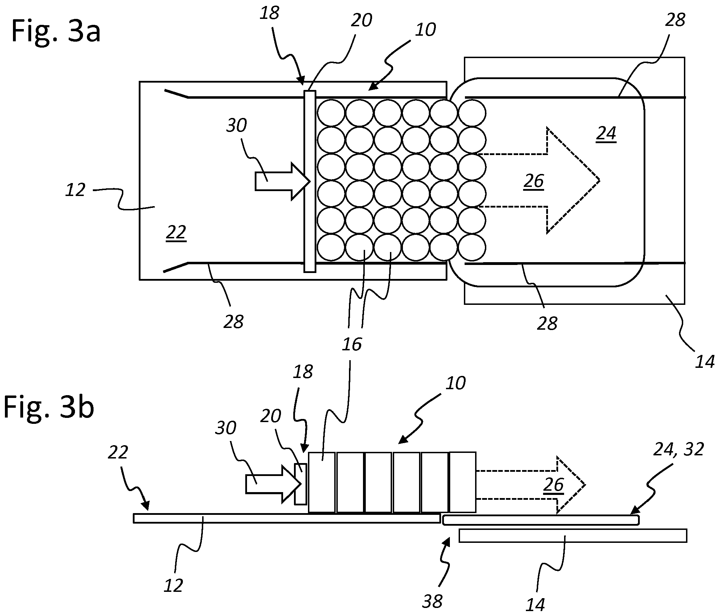

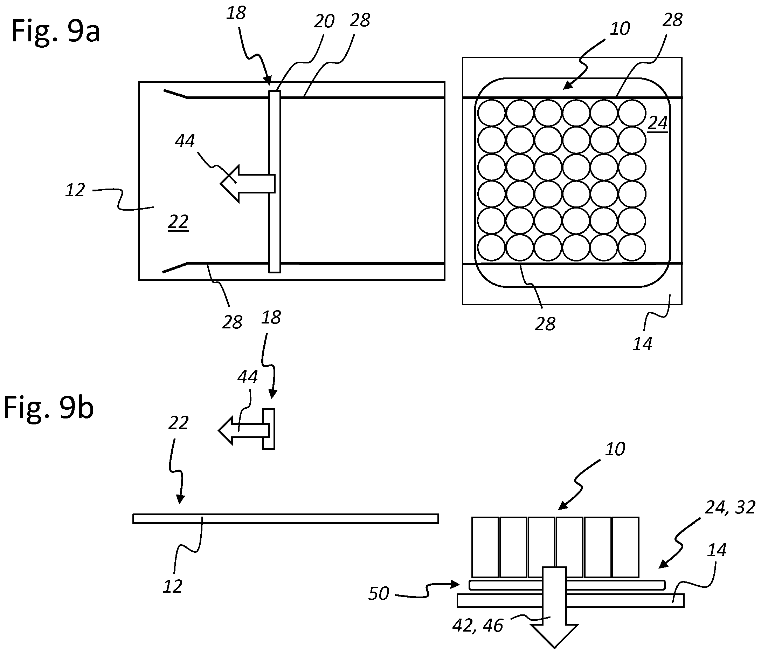

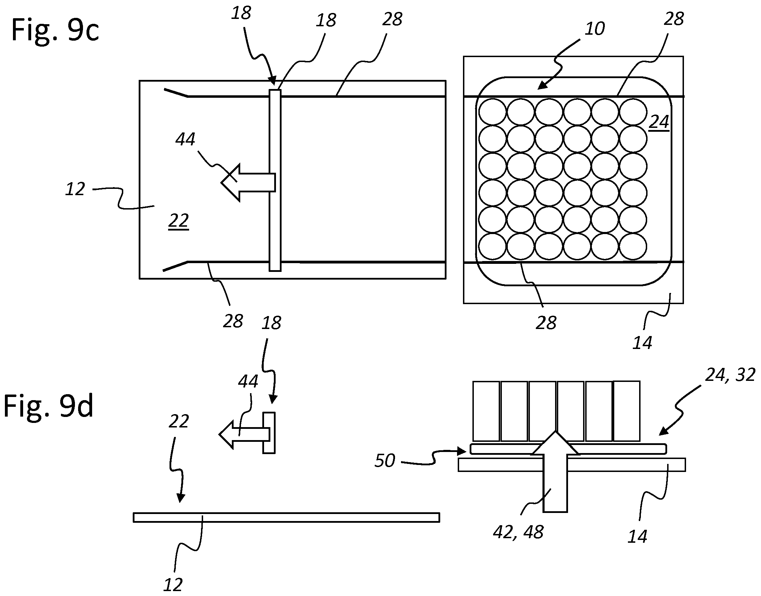

Wie es insbesondere die schematischen Seitenansichten der Figuren 1b, 2b, 7b, 8b und 9b erkennen lassen, ist die zweite Auflageebene 24, die bspw. durch einen Auflagetisch 32 aus Holz oder einem anderen geeigneten Material gebildet sein kann, gegenüber dem vertikal beweglichen zweiten Fördermodul 14 in horizontaler Richtung verschiebbar gelagert. Diese horizontale Relativverschiebbarkeit kann zwischen zwei Endlagen oder Endpositionen erfolgen. Eine erste Endlage ist in den Figuren 2b (sowie den Figuren 3b, 4b, 5b und 6b) erkennbar, bei der sich die zweite Auflageebene 24 bzw. der Auflagetisch 32 nahe an der ersten Auflageebene 22 des ersten Fördermoduls 12 befindet. Dagegen ist die in den Figuren 9b und 9d gezeigte zweite Endlage dadurch charakterisiert, dass sich der Auflagetisch 32 bzw. die zweite Auflageebene 24 hierbei in größerer horizontaler Entfernung von der ersten Auflageebene 22 befindet.

Die Figuren 1a und 1b verdeutlichen eine Rückhubbewegung 34 des Auflagetischs 32 mit der zweiten Auflageebene 24 in Richtung zur ersten Auflageebene 22. Die den Auflagetisch 32 in die erste Endlage verschiebende Rückhubbewegung 34 ist damit der Förder- bzw. Vorschubbewegung 26 der Artikellage 10 entgegen gerichtet. Die Figuren 2a ff. lassen erkennen, dass die Rückhubbewegung 34 (Fig. 1a, Fig. 1b) zu einem Stillstand gekommen ist, da der Auflagetisch 32 seine erste Endlage nahe der ersten Auflageebene 22 des ersten Fördermoduls 12 erreicht hat. Da hierbei ein Spalt 36 zwischen den beiden aneinander grenzenden Auflageebenen 22 und 24 minimal ist, kann die Artikellage 10 weitgehend problemlos und ohne Überwindung einer störenden Stufe vom ersten Fördermodul 12 auf das zweite Fördermodul 14 überschoben werden. Eine weitere Bedingung hierfür ist, dass sich die Auflageebenen 22 und 24 auf gleichen vertikalen Niveaus befinden und ihre Oberflächen damit fluchten, was in den Darstellungen der Figuren 1a bis 7b jeweils gegeben ist.

Wahlweise erfolgt die Vorschubbewegung 26 nicht mit konstanter Geschwindigkeit, so dass die Schiebebewegung 30 der Überschubeinrichtung 18 bzw. des Schubbalkens 20 zumindest kurz vor dem Erreichen der Zielposition der Artikellage 10 auf dem zweiten Fördermodul 14 allmählich langsamer werden kann, damit sie nicht plötzlich zum Stillstand kommt. Die Gefahr, dass einzelne der zuvorderst in der verschobenen Artikellage 10 stehenden Artikel 16 verrutschen oder umkippen können, wenn die Artikellage 10 stärker verzögert wird oder plötzlich zum Stillstand kommt, insbesondere bei Erreichen der Zielposition der Artikellage 10, kann wahlweise durch Einsatz eines hier nicht dargestellten Anlagebalkens reduziert werden. Da der Schubbalken 20 die Artikellage 10 gegenüber den Auflageebenen 22 und 24 des ersten und zweiten Moduls 12, 14 verschiebt, auf der die verschobenen Artikel 16 gleiten, besteht zwischen den Bodenflächen der Artikel 16 und den Auflageebenen 24 und 26 jeweils eine permanente Gleitreibung, die für einen Reibungswiderstand zwischen den gleitenden Oberflächen sorgt. Aus diesem Grund kann eine starke Verzögerung der Artikellage 10 zu einem Umkippen einzelner Artikel 16 oder zu deren Verschieben gegenüber den benachbarten Artikeln 16 führen, was durch den optionalen, in den Figuren jedoch nicht dargestellten Anlagebalken verhindert werden kann.

Die schematischen Ansichten der Figuren 1 bis 9 zeigen aufeinander folgende Prozessschritte beim Überschub einer kompletten Artikellage 10 vom ersten Fördermodul 12 auf das vertikal bewegliche zweite Fördermodul 14. In diesem Ausführungsbeispiel kann das jeweils links dargestellte erste Fördermodul 12 bspw. durch ein Gruppiersystem oder einen Bereitstellungsplatz gebildet sein, von dem jeweils nacheinander fertig gruppierte Artikellagen 10 zur Verfügung gestellt werden. Diese Artikellagen 10, die zuvor von einem hier nicht dargestellten Sortier- und/oder Gruppiersystem in die gezeigte Lagenformation der Artikellage 10 gebracht wurden, stehen dann auf dem Gruppiertisch oder Gruppiersystem zur Verfügung. Ein solches Gruppier- oder Sortiersystem kann bspw. einen oder mehrere Handhabungsroboter umfassen, die aus einem oder mehreren Artikelzuläufen geschlossene Artikellagen 10 bilden, die in der dargestellten Weise auf das erste Fördermodul 12 bzw. das Gruppiersystem überführt werden. Das Gruppiersystem ist im gezeigten Ausführungsbeispiel weder höhenverstellbar noch horizontal verschiebbar, sondern kann ortsfest angeordnet sein.

Um den in Fig. 1a und Fig. 1b erkennbaren Spalt 36 zwischen der ersten Auflageebene 22 des ersten Fördermoduls 12 und dem zweiten Fördermodul 14 zu reduzieren bzw. zu überbrücken, befindet sich in der Darstellung der Fig. 2a und 2b die horizontal verschiebbare zweite Auflageebene 24 bzw. der horizontal verschiebbare Auflagetisch 32 in ihrer/seiner ersten Endlage 38, die während des gesamten Überschubvorganges beibehalten wird. Zudem befinden sich die Auflageebenen 22 und 24 in derselben Höhe, so dass ein stufenloses Überschieben der Artikellage 10 ermöglicht ist. Zu diesem Zweck wurde der verschiebbare Auflagetisch 32 mittels der Rückhubbewegung 34 an den Rand der ersten Auflageebene 22 geschoben (Fig. 1a und Fig. 1b).

Während sich die Artikellage 10 in den Darstellungen der Figuren 1a und 1b noch auf der ersten Auflageebene 22 befindet und sich durch die Schiebebewegung 30 des Schubbalkens 20 der Überschubeinrichtung 18 in der Vorschubbewegung 26 dem rechten Rand der ersten Auflageebene 22 und dem Spalt 36 zur zweiten Auflageebene 24 nähert, hat die Artikellage 10 in den beiden Darstellungen der Figuren 2a und 2b diesen Rand bereits erreicht. Allerdings ist der Spalt 36 durch die Linksverschiebung des Auflagetischs 32 in die erste Endlage 38 geschlossen, so dass die Vorschubbewegung 26 gemäß Fig. 3a (Draufsicht) und Fig. 3b (Seitenansicht) ungehindert fortgesetzt werden kann. So zeigen die Figuren 3a, 3b, 4a, 4b, 5a und 5b jeweils in Zeichnungspaaren (Draufsichten der Figuren 3a, 4a und 5a sowie Seitenansichten der Figuren 3b, 4b und 5b) eine gleichmäßige Überschubbewegung der Artikellage auf die zweite Auflageebene 24 bzw. auf den Auflagetisch 32 des zweiten Fördermoduls 14.

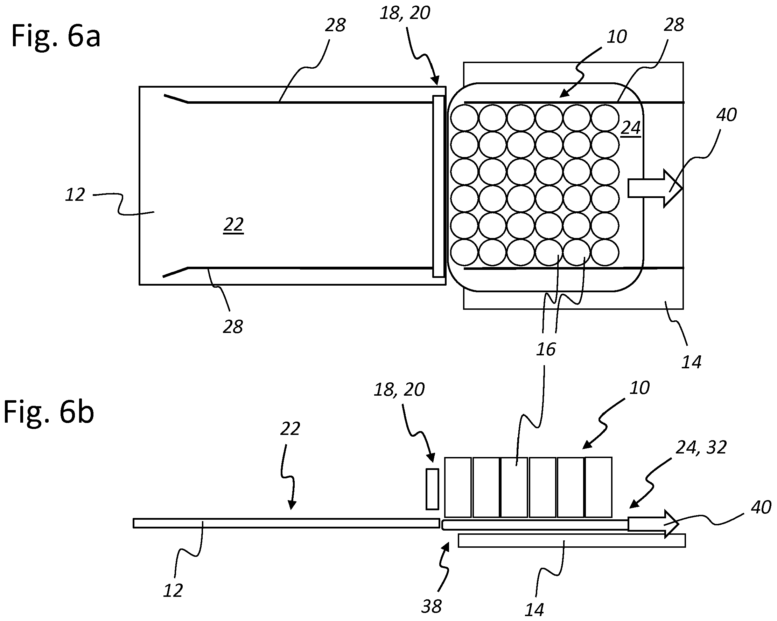

Die beiden Ansichten der Fig. 6 (Draufsicht der Fig. 6a und Seitenansicht der Fig. 6b) verdeutlichen die Platzierung der vollständigen Artikellage 10 mit allen sechsunddreißig Artikeln 16 auf der zweiten Auflageebene 24 bzw. auf dem Auflagetisch 32. Der Schubbalken 20 hat hierbei den rechten Rand des ersten Fördermoduls 12 bzw. dessen erster Auflageebene 22 erreicht und bleibt somit räumlich dem ersten Fördermodul 12 zugeordnet, während die zuhinterst stehenden Artikel 16 der Artikellage 10 bereits vollständig auf dem Auflagetisch 32 stehen. In diesem Überschubstadium endet die Schiebebewegung 30 des Schubbalkens 20, während eine Horizontalbewegung 40 des Auflagetischs 32 der zweiten Auflageebene 24 in Förderrichtung und damit parallel zur Vorschubbewegung 26 der Artikellage 10 eingeleitet werden kann (vgl. Fig. 6a und Fig. 6b).

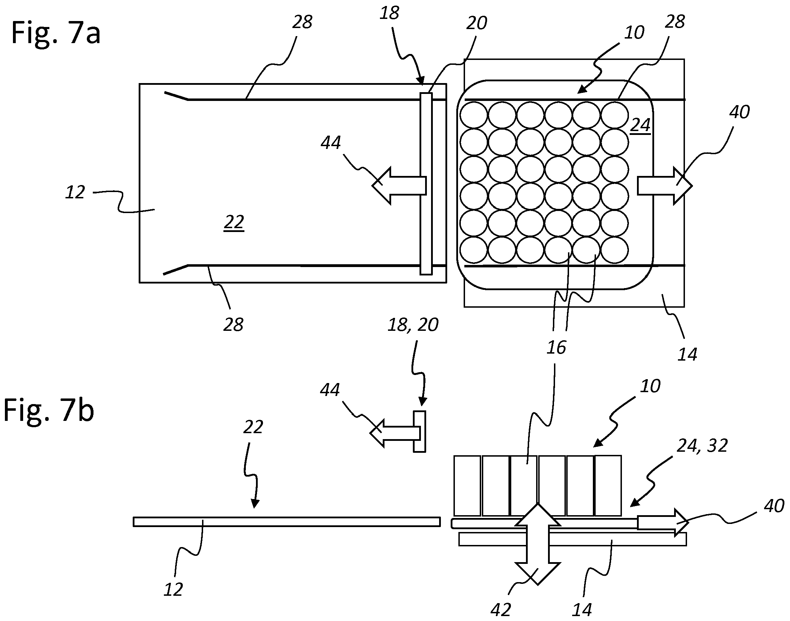

Entscheidend für die anschließende ungehinderte und kollisionsfreie Hubbewegung des zweiten Fördermoduls 14 nach oben oder unten ist die Positionierung des Schubbalkens 20 der Überschubeinrichtung 18 in seiner zweiten Endlage, die nicht in den Umriss der zweiten Auflageebene 24 hineinreicht, sondern eindeutig der ersten Auflageebene 22 des ersten Fördermoduls 12 zugeordnet bleibt. Unabhängig von der Positionierung des Schubbalkens 20 in der solchermaßen definierten zweiten Endlage kann die horizontale Schubbewegung 40 der beweglichen Auflageebene 24 bzw. des Auflagetischs 32 beginnen, wie dies in den Figuren 6a und 6b verdeutlicht ist. Wahlweise kann der Schubbalken 20 bereits unmittelbar nach Erreichen der zweiten Endlage angehoben oder abgesenkt werden, um bei der nachfolgenden Rückhub- oder Rückzugbewegung 44 (vgl. Fig. 7a) eine Kollision mit einer ggf. nachfolgend beförderten Artikellage 10 (hier nicht dargestellt) zu vermeiden (vgl. Fig. 7b).

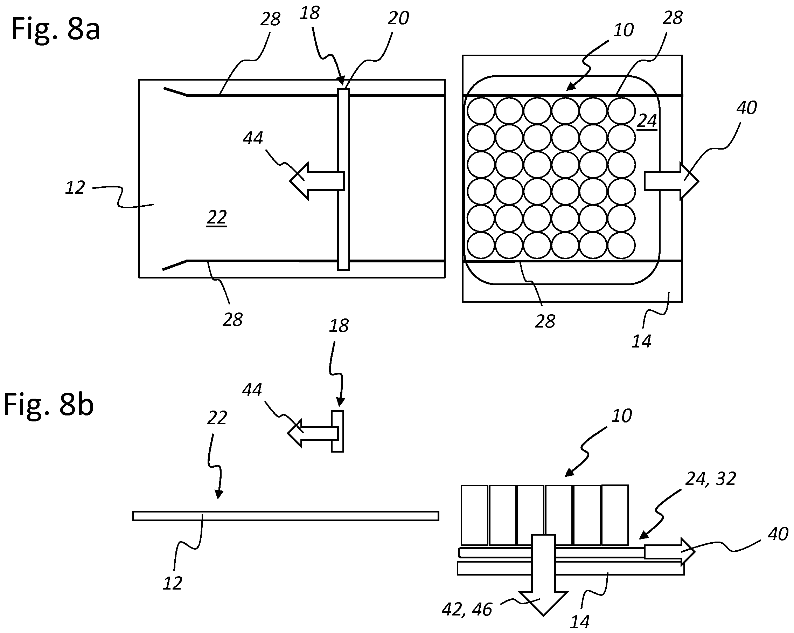

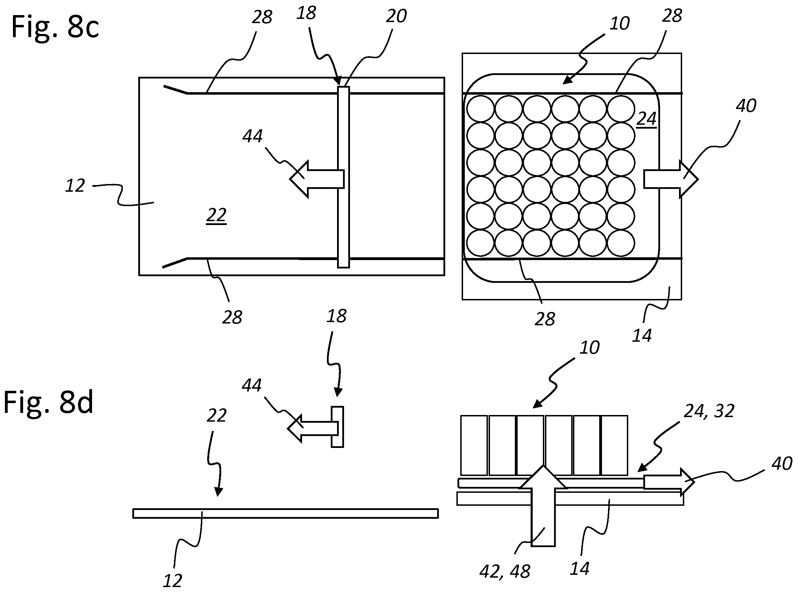

Wie es die Figuren 7a und 7b erkennen lassen, können gleichzeitig mit dieser Horizontalbewegung des Auflagetischs 32 und der darauf stehenden Artikellage 10 Hubbewegungen 42 des zweiten Fördermoduls 14 mitsamt dem Auflagetisch 32 sowie eine Rückzugbewegung 44 des Schubbalkens 20 der Überschubeinrichtung 18 eingeleitet werden. Wahlweise kann die Hubbewegung 42 des zweiten Fördermoduls 14 nach unten (Senkbewegung 46; vgl. Fig. 8b) oder nach oben (Hebebewegung 48; vgl. Fig. 8d) gerichtet sein, während die Rückzugbewegung 44 des Schubbalkens 20 entgegen der Förderrichtung fortgesetzt (Figuren 8a, 8b, 8c und 8d und 9a, 9b sowie 9c und 9d) und die Horizontalbewegung 40 des Auflagetischs 32 nach rechts jeweils fortgesetzt werden können. So zeigen die Figuren 9a bis 9d die beendete Horizontalbewegung 40 des Auflagetischs 32, der seine zweite Endlage 50 erreicht hat, in der die zweite Auflageebene 24 einen maximalen horizontalen Abstand von der ersten Auflageebene 22 erreicht hat.

Die Rückzugbewegung des Schubbalkens 20 der Überschubeinrichtung 18 kann wahlweise in der gezeigten Weise oberhalb des Niveaus der nachfolgenden Artikellage 10 erfolgen, die zwar in den Figuren 7a und 7b nicht dargestellt ist, die aber bereits wieder auf der ersten Förderebene 22 des ersten Fördermoduls 12 platziert sein kann. Diese Rückführbewegung kann prinzipiell auch unterhalb der Förderebene 22 erfolgen, sofern dies aus konstruktiven Gründen zweckmäßiger sein sollte. Eine sinnvolle Ausgestaltung kann bspw. vorsehen, dass im Interesse einer höheren Verarbeitungsgeschwindigkeit zwei oder mehr solcher Überschubbalken 20 an einem endlos umlaufenden Zugmittelantrieb angeordnet sind und solchermaßen wechselweise für den Überschub einer Artikellage 10 auf das zweite Fördermodul 14 sowie für die Rückführung 44 in die erste Endlage vorbereitet werden.

Die Figuren 7, 8 und 9 verdeutlichen jeweils die gleichzeitig auflaufenden Hubbewegungen 42 (Senk- oder Hebebewegung 46, 48) des zweiten Fördermoduls 14 mit dem darauf befindlichen Auflagetisch 32 und die in horizontaler Richtung zwischen den beiden Endlagen 38 und 50 bewegte zweite Auflageebene 24, so dass einerseits jede Kollision des Schubbalkens 20 mit dem zweiten Fördermodul 14 vermieden werden kann, ohne dass dies zu Nachteilen bei den Handhabungs- und Fördergeschwindigkeiten bei der Ablage und/oder Palettierung der Artikellage 10 auf einem (hier nicht dargestellten) Ablage- oder Stapelplatz führen muss. Eine solche Übergabe der Artikellage 10 kann bspw. mittels eines Jalousie- oder sog. Plattengreiferkopfes realisiert werden, der eine komplette Artikellage 10 nach unten durch Öffnen oder seitliches Verschieben seines verschiebbaren Bodens abladen kann.

Nachdem die Artikellage 10 vom zweiten Fördermodul 14 abgegeben wurde, bspw. auf dem Ablage- oder Stapelplatz, kann das zweite Fördermodul 14 in einer (hier nicht dargestellten) Rückhubbewegung wieder gemäß Fig. 1 positioniert werden, so dass die Auflageebenen 22 und 24 miteinander fluchten. Gleichzeitig kann die zweite Auflageebene 24 in der Rückhubbewegung 34 aus der zweiten Endlage 50 in die erste Endlage 38 zurückbewegt werden, so dass eine weitere Artikellage 10 in der beschriebenen Weise zwischen den beiden Fördermodulen 12 und 14 überschoben werden kann.

Eine weitere, hier jedoch nicht dargestellte Variante des Stapelverfahrens kann wahlweise vorsehen, dass auf der Beladestation (dem zweiten Fördermodul 14) mehrere Artikellagen 10 gleichzeitig abgelegt werden. Durch die gleichzeitige Handhabung und Stapelung mehrerer Artikellagen 10 können ggf. die Palettenwechselzeiten deutlich reduziert werden. Hierdurch fungiert die Beladestation als eine Art Zwischenspeicher, wodurch die erforderlichen Zeiten für einen Palettenwechsel minimiert werden können.

Ergänzend sei darauf hingewiesen, dass auch das zweite, vertikal bewegliche Fördermodul 14 eine hier nicht dargestellt weitere Überschubeinrichtung aufweisen kann, um die dort befindliche Artikellage 10 auf ein weiteres, hier nicht gesondert erwähntes Fördermodul, bspw. eine Beladestation o. dgl., überführen bzw. überschieben zu können. Diese zusätzliche, dem zweiten Fördermodul 14 zugeordnete Überschubeinrichtung kann ggf. relativ kurze Bewegungsbereiche aufweisen, da lediglich ein vollständiges Überführen auf ein weiteres Förderelement bzw. ein Herunterschieben der Artikellage 10 vom zweiten Fördermodul 14 zu gewährleisten ist. Wahlweise kann dieses Verschieben der Artikellage 10 vom zweiten Fördermodul 14 auch während dessen vertikaler Bewegung erfolgen, insbesondere bei einem synchron dazu beweglichen weiteren Fördermodul, bspw. einer entsprechend vertikal und synchron zum zweiten Fördermodul 14 beweglichen Beladestation, die dem zweiten Fördermodul 14 unmittelbar nachgeordnet sein kann. In diesem Fall ist das erste Fördermodul 12 als Bereitstellungsmodul oder als Gruppiermodul zu bezeichnen, während das zweite Fördermodul 14 insbesondere als Transferstation oder als Transfermodul anzusehen bzw. zu bezeichnen ist. Ein folgendes, ggf. synchron oder unabhängig vom zweiten Fördermodul 14 bewegliches drittes Fördermodul (nicht dargestellt) kann in diesem Fall durch eine Beladestation oder ein Belademodul o. dgl. gebildet sein. Wahlweise können das zweite Fördermodul 14 und das hier nicht dargestellte dritte Fördermodul jeweils eigene Überschubeinrichtungen zur Überführung der Artikellage 10 in Förderrichtung aufweisen.

Die oszillierend bewegliche zweite Auflageebene 24 des zweiten Fördermoduls 14 bewegt sich demnach zwischen dem ersten Fördermodul 12 und einem hier nicht dargestellten, dem zweiten Fördermodul 14 in Förderrichtung nachgeordneten dritten Fördermodul, so dass alle Lücken in der Förder- und Auflageebene zwischen den einzelnen Modulen von der horizontal zwischen ihren beiden Endlagen 38 und 50 beweglichen zweiten Auflageebene 24 ausgeglichen und überbrückt werden können.

Durch diese Beweglichkeit der zweiten Auflageebene 24 kann auch das Überschieben der Artikellage 10 vom zweiten Fördermodul 14 auf ein drittes Fördermodul, bspw. einer Beladestation, während einer synchronen Vertikalbewegung der beiden Fördermodule begünstigt und erleichtert werden.

Eine hier nicht dargestellte Ausführungsvariante kann vorsehen, dass in Förderrichtung wenigstens ein weiteres Fördermodul vorgesehen ist. So kann sich die Vorrichtung wahlweise auf ein drittes Fördermodul erstrecken, das dem zweiten Fördermodul 14 in Förderrichtung unmittelbar nachgeordnet ist. Somit können die Artikelgruppen oder Artikellagen 10 vom vertikal beweglichen zweiten Fördermodul 14 auf das vertikal bewegliche dritte Fördermodul verschoben werden. Das optionale dritte Fördermodul, das wie das zweite Fördermodul 14 vertikal beweglich ist, kann insbesondere durch eine sog. Beladestation gebildet sein, während das zweite Fördermodul 14 bspw. durch eine sog. Transferstation gebildet sein kann. Dabei kann vorgesehen sein, dass das zweite Fördermodul 14 und das dritte Fördermodul während des Überschubvorgangs der Artikelgruppe oder Artikellage 10 auf gleicher vertikaler Höhe ruhen, bis der Überschubvorgang abgeschlossen ist. Wahlweise kann jedoch auch vorgesehen sein, dass das zweite Fördermodul 14 und das hier nicht dargestellte dritte Fördermodul während des Überschubvorgangs der Artikelgruppe oder Artikellage 10 gleichsinnige synchrone Vertikalbewegungen ausführen, so dass sich auf diese Weise die Beladestation bzw. das dritte Fördermodul bereits auf einen nachfolgenden Ablegevorgang oder Absetzvorgang der Artikellage vorbereiten kann, bspw. auf einen dafür vorbereiteten Stapelplatz mit einer darauf befindlichen Palette oder auf einer Oberseite einer dort zuvor bereits abgelegten Artikellage.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Artikellage, Artikelgruppe
- 12: erstes Fördermodul
- 14: zweites Fördermodul
- 16: Artikel, Gebinde, Behälter
- 18: Überführungseinrichtung, Überschubeinrichtung
- 20: Schubbalken
- 22: erste Auflageebene (des ersten Fördermoduls)
- 24: zweite Auflageebene (des zweiten Fördermoduls)
- 26: Vorschubbewegung, Förderbewegung
- 28: seitliche Führung, Führungsschienen
- 30: Schiebebewegung (Schubbalken)
- 32: Auflagetisch
- 34: Rückhubbewegung (der zweiten Auflageebene, des Auflagetischs)
- 36: Spalt
- 32: Auflagetisch
- 34: Rückhubbewegung
- 36: Spalt
- 38: erste Endlage
- 40: Horizontalbewegung
- 42: Hubbewegung
- 44: Rückzugbewegung
- 46: Senkbewegung
- 48: Hebebewegung
- 50: zweite Endlage

## Patentansprüche

1. Verfahren zur horizontalen Verschiebung (26) von Artikelgruppen oder Artikellagen (10) von einer ersten Auflageebene (22) eines ersten Fördermoduls (12) auf eine vertikal bewegliche zweite Auflageebene (24) eines dem ersten Fördermodul (12) in einer Förderrichtung unmittelbar nachgeordneten zweiten Fördermoduls (14), wobei die jeweils überschobene Artikelgruppe oder Artikellage (10) auf dem zweiten Fördermodul (14) mittels einer gegenüber diesem zweiten Fördermodul (14) horizontal beweglichen Auflageebene (24) in Förderrichtung verschoben und/oder mittels der horizontal beweglichen Auflageebene (24) auf dem zweiten Fördermodul (14) zentriert wird, **dadurch gekennzeichnet, dass** die Artikelgruppe oder Artikellage (10) mittels der Auflageebene (24) auf dem zweiten Fördermodul (14) verschoben und/oder zentriert wird, während dieses eine vertikale Hubbewegung (42) ausführt und dass die Artikelgruppen oder Artikellagen (10) vom vertikal beweglichen zweiten Fördermodul (14) auf ein dem zweiten Fördermodul (14) in Förderrichtung unmittelbar nachgeordnetes, vertikal bewegliches drittes Fördermodul, insbesondere gebildet durch eine vertikal bewegliche Beladestation, verschiebbar sind, wobei das zweite Fördermodul (14) und das dritte Fördermodul während des Überschubvorgangs der Artikelgruppe oder Artikellage (10) auf gleicher vertikaler Höhe ruhen oder gleichsinnige synchrone Vertikalbewegungen ausführen.

2. Verfahren nach Anspruch 1, bei dem die horizontale Verschiebung (26) der Artikelgruppen oder Artikellagen (10) von der ersten Auflageebene (22) des ersten Fördermoduls (12) auf die vertikal bewegliche zweite Auflageebene (24) des zweiten Fördermoduls (14) mittels wenigstens einer Überschubeinrichtung (18) erfolgt, die während der Überschubbewegung (26) räumlich dem ersten Fördermodul (12) zugeordnet bleibt.

3. Verfahren nach Anspruch 1 oder 2, bei welchem die horizontal bewegliche zweite Auflageebene (24) zwischen zwei Endlagen (38, 50) oszillierbar ausgebildet ist und sich bei beginnender Überschubbewegung (26) der Artikelgruppe oder Artikellage (10) in ihrer ersten Endlage (38) befindet, die sich näher am ersten Fördermodul (12) befindet als eine zweite Endlage (50).

4. Verfahren nach Anspruch 3, bei dem die horizontal bewegliche Auflageebene (24) zumindest kurz vor dem beginnenden Überschubvorgang (26) der Artikelgruppe oder Artikellage (10) auf das zweite Fördermodul (14) in die erste Endlage (38) gebracht wird, in der sie sich dem ersten Fördermodul (12) nähert oder dieses kontaktiert oder zumindest abschnittsweise auf dessen Oberfläche aufliegt.

5. Verfahren nach einem der Ansprüche 1 bis 4, bei dem sich die horizontal bewegliche Auflageebene (24) bei Annäherung der Überschubeinrichtung (18) an einen an das zweite Fördermodul (14) grenzenden Randabschnitt des ersten Fördermoduls (12) bzw. bei dessen Erreichen in Richtung der zweiten Endlage (50) bewegt wird und sich dabei parallel zur Überschubrichtung (26) bewegt.

6. Vorrichtung zur horizontalen Verschiebung von Artikelgruppen oder Artikellagen (10) von einer ersten Auflageebene (22) eines ersten Fördermoduls (12) auf eine zweite, vertikal bewegliche Auflageebene (24) eines dem ersten Fördermodul (12) in einer Förderrichtung unmittelbar nachgeordneten zweiten Fördermoduls (14), wobei die Vorrichtung mit wenigstens einer in Förderrichtung rückseitig an der zu verschiebenden Artikelgruppe oder Artikellage (10) angreifenden Überschubeinrichtung (18) ausgestattet ist, wobei die Überschubeinrichtung (18) als im Bereich des ersten Fördermoduls (12) bis zum Rand der ersten Auflageebene (22) zur zweiten Auflageebene (24) bewegbarer Überschubbalken (20) ausgebildet ist, und wobei die zweite Auflageebene (24) durch eine Platte (32) gebildet ist, welche in horizontaler Richtung zwischen zwei Endlagen (38, 50) beweglich und/oder oszillierbar ausgebildet ist, wobei die Platte (32) in der ersten Endlage (38) unmittelbar oder nahe am ersten Fördermodul (12) platzierbar und in der zweiten Endlage (50) zumindest geringfügig vom ersten Fördermodul (12) entfernt und/oder gegenüber dem zweiten Fördermodul (14) annähernd zentrierbar ist, **dadurch gekennzeichnet, dass** dem vertikal beweglichen zweiten Fördermodul (14) in Förderrichtung ein vertikal bewegliches drittes Fördermodul unmittelbar nachgeordnet ist, das insbesondere durch eine vertikal bewegliche Beladestation gebildet ist.

7. Vorrichtung nach Anspruch 6, bei der die Platte (32) eine Fläche aufweist, die wenigstens der Grundfläche einer aufzunehmenden Artikelgruppe oder Artikellage (10) entspricht.

8. Vorrichtung nach einem der Ansprüche 6 oder 7, bei der die horizontal verschiebbare zweite Auflageebene (24) durch einen Auflagetisch (32) mit einer strukturierten Oberfläche wie Holz, Kunststoff o. dgl. gebildet ist.

9. Vorrichtung nach einem der Ansprüche 6 bis 8, bei der ein horizontaler Abstand zwischen den beiden Endlagen (38, 50) der zweiten Auflageebene (24) zwischen ca. 5 und ca. 25 cm, insbesondere zwischen ca. 8 und 15 cm und besonders bevorzugt ca. 10 cm beträgt.

## Claims

1. A method for the horizontal displacement (26) of article groups or article layers (10) from a first support surface (22) of a first conveying module (12) onto a vertically movable second support surface (24) of a second conveying module (14) that is disposed immediately downstream in a conveying direction of the first conveying module (12), wherein each transferred article group or article layer (10) is displaced in conveying direction on the second conveying module (14) by means of a support surface (24) that is horizontally movable in relation to this second conveying module (14) and/or is centred on the second conveying module (14) by means of the horizontally movable support surface (24), **characterised in that** the article group or article layer (10) is displaced and/or centred on the second conveying module (14) by means of the support surface (24) while said second conveying module (24) is performing a vertical lifting movement (42), and **characterised in that** the article groups or article layers (10) are displaceable from the vertically movable second conveying module (14) onto a vertically movable third conveying module disposed immediately downstream in conveying direction from the second conveying module (14), with said third conveying module being formed, in particular, by a vertically movable loading station, wherein the second conveying module (14) and the third conveying module rest at the same vertical height or perform synchronous vertical movements in the same direction during the transfer procedure of the article group or article layer (10).

2. The method as recited in claim 1, with the horizontal displacement (26) of the article groups or article layers (10) from the first support surface (22) of the first conveying module (12) onto the vertically movable second support surface (24) of the second conveying module (14) being carried out by means of at least one transfer sliding device (18), which remains spatially assigned to the first conveying module (12) during the transfer movement (26).

3. The method as recited in claim 1 or 2, with the horizontally movable second support surface (24) being designed to be oscillatable between two end positions (38, 50) and being located in its first end position (38) when the transfer movement (26) of the article group or article layer (10) starts, with said first end position (38) being located closer to the first conveying module (12) than a second end position (50).

4. The method as recited in claim 3, with the horizontally movable support surface (24) being brought into the first end position (38) at least shortly before the transfer procedure (26) of the article group or article layer (10) onto the second conveying module (14) starts, in which first end position (38) the horizontally movable support surface (24) approaches toward the first conveying module (12) or contacts it or at least in sections rests on its surface.

5. The method as recited in one of the claims 1 to 4, with the horizontally movable support surface (24) being moved toward the second end position (50) and in the process moving parallel to the transfer direction (26) when the transfer sliding device (18) approaches toward or, as the case may be, reaches, an edge section of the first conveying module (12) abutting on the second conveying module (14).

6. An apparatus for the horizontal displacement (26) of article groups or article layers (10) from a first support surface (22) of a first conveying module (12) onto a second vertically movable support surface (24) of a second conveying module (14) that is disposed immediately downstream in a conveying direction of the first conveying module (12); wherein the apparatus is equipped with at least one transfer sliding device (18) contacting from the back in conveying direction the article group or article layer (10) to be displaced; wherein the transfer sliding device (18) is designed as a transfer slide bar (20) that is movable in the range of the first conveying module (12) up to the edge of the first support surface (22) adjoining the second support surface (24); and wherein the second support surface (24) is formed by a table board (32) that is designed to be movable and/or oscillatable in a horizontal direction between two end positions (38, 50); wherein, in the first end position (38), the table board (32) is placeable immediately at or close to the first conveying module (12), and, in the second end position (50), said table board (32) is at least slightly distant from the first conveying module (12) and/or approximately centrable in relation to the second conveying module (14); **characterised in that** a vertically movable third conveying module is disposed immediately downstream in conveying direction from the vertically movable second conveying module (14), with the third conveying module being formed, in particular, by a vertically movable loading station.

7. The apparatus as recited in claim 6, with the table board (32) having an area corresponding to at least the base area of an article group or article layer (10) to be accommodated.

8. The apparatus as recited in one of the claims 6 or 7, with the horizontally displaceable second support surface (24) being formed by a support table (32) with a structured surface, such as wood, plastic, or the like.

9. The apparatus as recited in one of the claims 6 to 8, with a horizontal distance between the two end positions (38, 50) of the second support surface (24) amounting to between about 5 and about 25 cm, in particular, between about 8 and 15 cm, and particularly preferentially to about 10 cm.

## Revendications

1. Procédé de déplacement horizontal (26) de groupes d'articles ou de couches d'articles (10) depuis un premier plan d'appui (22) d'un premier module de transport (12) sur un deuxième plan d'appui (24) déplaçable verticalement d'un deuxième module de transport (14) qui est disposé immédiatement en aval du premier module de transport (12) dans une direction de transport, dans lequel le groupe d'articles ou la couche d'articles (10) respectivement transféré(e) par poussée est déplacé(e) dans la direction de transport sur ledit deuxième module de transport (14) au moyen d'un plan d'appui (24) déplaçable horizontalement par rapport à ce deuxième module de transport (14) et/ou est centré(e) sur le deuxième module de transport (14) au moyen dudit plan d'appui (24) déplaçable horizontalement, **caractérisé par le fait que** le groupe d'articles ou la couche d'articles (10) est déplacé(e) et/ou centré(e) au moyen du plan d'appui (24) sur le deuxième module de transport (14) pendant que celui-ci exécute un mouvement de levage vertical (42), et que les groupes d'articles ou couches d'articles (10) sont déplaçables depuis ledit deuxième module de transport (14) déplaçable verticalement sur un troisième module de transport qui est déplaçable verticalement et disposé immédiatement en aval du deuxième module de transport (14) dans la direction de transport et est formé en particulier par un poste de chargement déplaçable verticalement, dans lequel le deuxième module de transport (14) et le troisième module de transport reposent à une hauteur verticale identique ou exécutent des mouvements verticaux synchrones de même sens pendant l'opération de transfert par poussée du groupe d'articles ou de la couche d'articles (10).

2. Procédé selon la revendication 1, dans lequel le déplacement horizontal (26) des groupes d'articles ou couches d'articles (10) depuis le premier plan d'appui (22) du premier module de transport (12) sur le deuxième plan d'appui (24) déplaçable verticalement du deuxième module de transport (14) se fait au moyen d'au moins un dispositif de transfert par poussée (18) qui reste associé dans l'espace au premier module de transport (12) durant le mouvement de transfert par poussée (26).

3. Procédé selon la revendication 1 ou 2, dans lequel ledit deuxième plan d'appui (24) déplaçable horizontalement est réalisé de manière à pouvoir osciller entre deux positions extrêmes (38, 50) et, lorsque le mouvement de transfert par poussée (26) du groupe d'articles ou de la couche d'articles (10) commence, se trouve dans sa première position extrême (38) qui est située plus près du premier module de transport (12) qu'une deuxième position extrême (50).

4. Procédé selon la revendication 3, dans lequel, au moins peu avant que l'opération de transfert par poussée (26) du groupe d'articles ou de la couche d'articles (10) sur le deuxième module de transport (14) commence, le plan d'appui (24) déplaçable horizontalement est amené à la première position extrême (38) où il s'approche du premier module de transport (12) ou entre en contact avec celui-ci ou repose, au moins par sections, sur la surface de celui-ci.

5. Procédé selon l'une quelconque des revendications 1 à 4, dans lequel, lorsque le dispositif de transfert par poussée (18) s'approche d'une section marginale du premier module de transport (12) qui est contiguë au deuxième module de transport (14) ou bien lorsqu'il atteint celle-ci, ledit plan d'appui (24) déplaçable horizontalement est déplacé en direction de la deuxième position extrême (50) tout en se déplaçant parallèlement à la direction de transfert par poussée (26).

6. Dispositif de déplacement horizontal de groupes d'articles ou de couches d'articles (10) depuis un premier plan d'appui (22) d'un premier module de transport (12) sur un deuxième plan d'appui (24) déplaçable verticalement d'un deuxième module de transport (14) qui est disposé immédiatement en aval du premier module de transport (12) dans une direction de transport, dans lequel le dispositif est équipé d'au moins un dispositif de transfert par poussée (18) s'engageant face arrière, dans la direction de transport, sur le groupe d'articles ou la couche d'articles (10) à déplacer, dans lequel ledit dispositif de transfert par poussée (18) est réalisé en tant que barre de transfert par poussée (20) apte à être déplacée au niveau du premier module de transport (12) jusqu'au bord du premier plan d'appui (22) au deuxième plan d'appui (24), et dans lequel le deuxième plan d'appui (24) est formé par une plaque (32) qui est réalisée de manière à pouvoir être déplacée et/ou osciller dans la direction horizontale entre deux positions extrêmes (38, 50), dans lequel, dans la première position extrême (38), ladite plaque (32) peut être placée directement sur le ou près du premier module de transport (12) et, dans la deuxième position extrême (50), elle est éloignée au moins légèrement du premier module de transport (12) et/ou peut être centrée approximativement par rapport au deuxième module de transport (14), **caractérisé par le fait qu'**un troisième module de transport déplaçable verticalement qui est formé en particulier par un poste de chargement déplaçable verticalement est disposé, dans la direction de transport, immédiatement en aval du deuxième module de transport (14) déplaçable verticalement.

7. Dispositif selon la revendication 6, dans lequel ladite plaque (32) présente une surface qui correspond au moins à la surface de base d'un groupe d'articles ou d'une couche d'articles (10) à recevoir.

8. Dispositif selon l'une quelconque des revendications 6 ou 7, dans lequel le deuxième plan d'appui (24) déplaçable horizontalement est formé par une table d'appui (32) ayant une surface structurée telle que le bois, la matière plastique ou similaire.

9. Dispositif selon l'une quelconque des revendications 6 à 8, dans lequel une distance horizontale séparant les deux positions extrêmes (38, 50) du deuxième plan d'appui (24) est comprise entre environ 5 et environ 25 cm, en particulier entre environ 8 et environ 15 cm et, de manière particulièrement préférée, elle est de 10 cm à peu près.
